# FASCICULE DE BREVET EUROPEEN

(11) **EP 0 745 493 B1**
(45) Date de publication et mention de la délivrance du brevet: **16.12.1998**
(21) Numéro de dépôt: 96401114.2
(22) Date de dépôt: 22.05.1996
(51) Int. Cl.: B60B 17/00

(54) **Roue de chemin de fer polyblocs**
Mehrstückiges Schienenfahrzeugrad
Multi-piece railway vehicle wheel

(30) Priorité: 30.05.1995 FR 9506330
(43) Date de publication de la demande: 04.12.1996
(73) Titulaire: VALDUNES, 92800 Puteaux (FR)
(72) Inventeur: Broucke, Jacques, 59210 Coudekerque-Branche (FR); Demilly, François, 59240 Dunkerque (FR)
(74) Mandataire: Bouget, Lucien

(56) Documents cités:
- EP-A- 0 034 911
- EP-A- 0 489 455
- DE-A- 1 455 130
- DE-A- 4 300 553
- FR-A- 1 126 819

## Description

La présente invention concerne une roue de chemin de fer polyblocs comprenant une jante, un centre, et un amortisseur disposé entre le centre et la jante.

Les roues de chemin de fer polyblocs sont bien connues. Elles sont utilisées, notamment, dans les tramways pour transport urbain afin de limiter les bruits engendrés par le roulement des roues sur les rails.

On connaît, par exemple, une roue de ce type dans laquelle l'amortisseur est constitué de deux anneaux de caoutchouc disposés l'un contre l'autre entre le centre de la roue et la jante et formant un V très ouvert. Mais, avec un tel montage, il n'est pas possible d'ajuster convenablement le comportement dynamique de la roue dans la direction axiale, c'est à dire dans la direction parallèle à l'axe de la roue.

On connaît, également, une roue dans laquelle l'amortisseur est constitué d'une pluralité de plots en caoutchouc disposés sur la circonférence du centre de la roue, entre le centre de la roue et la jante. Mais une roue de ce type est assez compliquée et coûteuse à fabriquer. De plus, et c'est le principal inconvénient, les plots en caoutchouc ne donnent qu'une faible raideur axiale à la roue, ce qui entraîne une instabilité axiale en fonctionnement.

La demande de brevet européen n°0 489 455 décrit une roue polyblocs dans laquelle l'amortisseur est un anneau en caoutchouc comportant deux lèvres formant avec l'axe de la roue un angle d'environ 60°, l'anneau en caoutchouc ne remplissant pas complètement l'espace compris entre le centre de la roue et la jante. Une telle roue a une bonne élasticité dans la direction axiale, mais il est difficile d'ajuster simultanément son élasticité dans la direction axiale et son élasticité dans la direction radiale afin d'optimiser son comportement phonique.

Dans ces trois roues, le caoutchouc est directement en contact avec le métal de la roue si bien que, sous l'effet des contraintes, l'amortisseur se déforme par fluage. Ces déformations modifient les caractéristiques dynamiques de l'amortisseur et détériorent son efficacité.

Enfin, pour toutes ces roues, il est nécessaire de forger séparément le coeur et la jante, ce qui complique la fabrication.

Le but de la présente invention est de remédier à ces inconvénients en proposant une roue de chemin de fer polyblocs commode à fabriquer, dont le comportement dynamique axial et radial peut être optimisé et dont les propriétés de l'amortisseur ont une bonne stabilité en service.

A cet effet, l'invention a pour objet une roue de chemin de fer polyblocs du type comprenant une jante annulaire, un centre, un amortisseur disposé entre le centre et la jante, au moins une bride et des moyens de fixation de l'au moins une bride, caractérisé en ce que la jante comporte, dans sa partie interne disposée en regard de l'axe de la roue, deux congés de raccordement situés de part et d'autre du plan de symétrie de la roue et reliés, dans leur partie la plus interne, par une bande annulaire généralement plate, en ce que l'amortisseur a une section en forme 5 de tulipe, et en ce que l'amortisseur est constitué de deux anneaux en matériau polymère élastique enserrés chacun entre un flanc métallique supérieur et un flanc métallique inférieur adhérents au matériau polymère, le flanc métallique supérieur coopérant avec un des congés de raccordement et la bande annulaire de la partie la plus interne de la jante, le flanc métallique inférieur coopérant avec une bride.

De préférence la roue de chemin de fer polyblocs comporte deux brides enserrant l'amortisseur, maintenues par une pluralité de boulons traversant le centre de la roue et assurant le serrage des deux brides contre l'amortisseur.

Afin de diminuer les bruits de crissement, la roue peut comporter, en outre, un jonc disposé dans une gorge annulaire de la jante.

Pour minimiser les bruits de crissement, de préférence, la masse de la jante doit être inférieure à 110Kg, la rigidité dynamique radiale de la roue doit être comprise entre 6x10⁸ et 16x10⁸ N/m, et la rigidité dynamique axiale de la roue doit être comprise entre 3x10⁸ et 8x10⁸ N/m.

Pour minimiser la transmission de vibrations de la voie à l'essieu, la masse de la jante doit être inférieure à 110Kg, la rigidité dynamique radiale de la roue doit être inférieure à 1x10⁸N/m, la rigidité dynamique axiale doit être supérieure à 1x10⁸N/m et la rigidité statique axiale de la roue doit être supérieure à 0,5x10⁸N/m.

L'invention concerne également un procédé pour la fabrication de la jante et du centre d'une roue de chemin de fer polyblocs selon lequel:
- on fabrique, par forgeage d'un lopin d'acier, une roue monobloc comportant un centre constitué d'un moyeu et d'un voile, et une jante raccordée au voile par des congés de raccordement de rayon comparable à la demi épaisseur de la jante,
- on sépare la jante et le centre, par exemple par poinçonnage le long de la ligne de raccordement du voile et des congés de raccordement,
- on usine la jante et le centre.

L'invention va maintenant être décrite de façon plus précise, mais non limitative, en regard des figures annexées, dans les quelles :
- la figure 1 représente une demi vue en coupe radiale d'une roue de chemin de fer polyblocs,

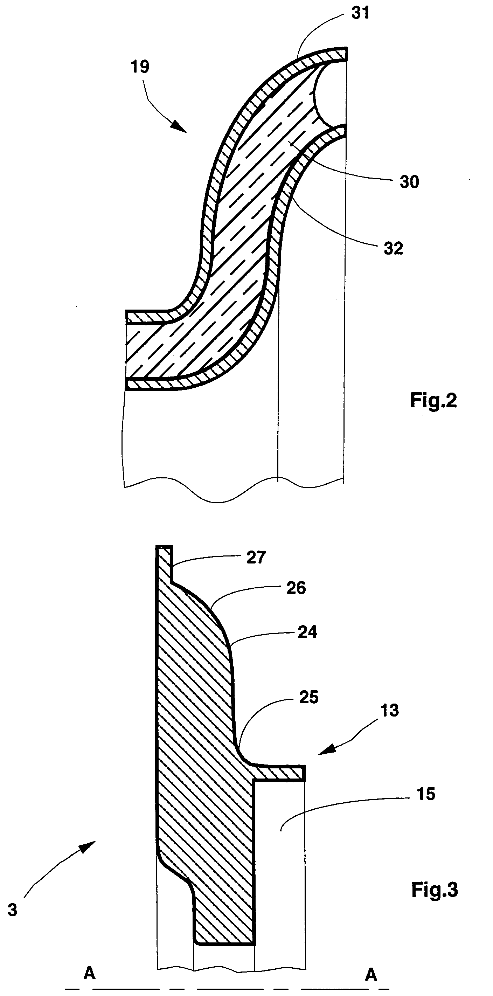

- la figure 2 représente une vue agrandie de la section d'un anneau amortisseur,
- la figure 3 représente une demi vue en coupe radiale d'une bride.

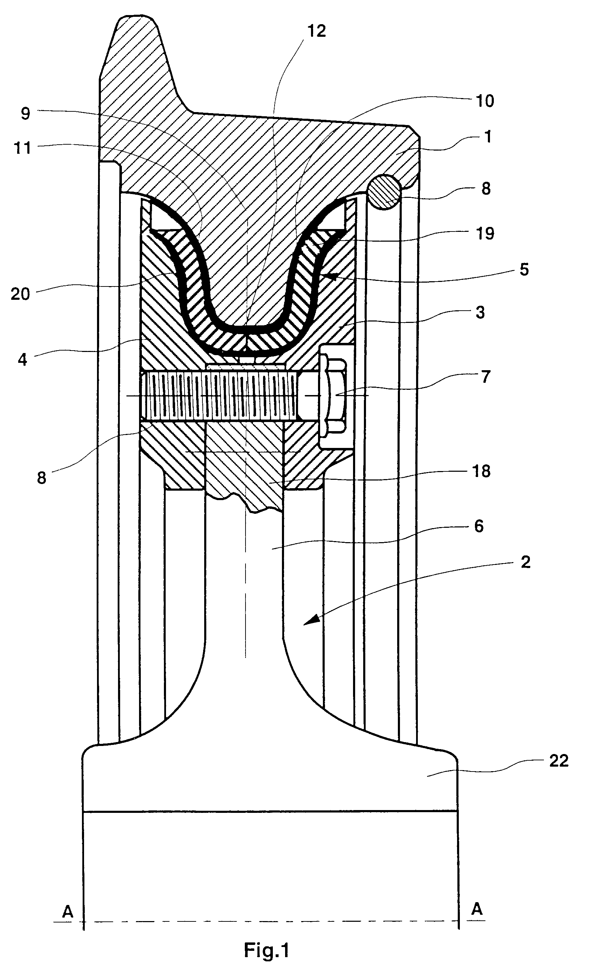

La roue de chemin de fer polyblocs selon l'invention est un empilage de pièces de révolution qui comporte une jante 1, un centre 2 monobloc constitué d'un moyeu 22 et d'un voile 6, deux brides 3 et 4 emboîtées sur la périphérie du voile 6, et un amortisseur 5 disposé entre, d'une part, les brides 3 et 4, et, d'autre part, la jante 1. Les brides 3 et 4 sont disposées en regard l'une de l'autre, de part et d'autre du voile 6 du centre 2, et sont maintenues serrées contre le voile 6 par une pluralité de boulons 7 traversant une bride 3 et le voile 6, et vissés dans une pluralité de trous filetés 8 de l'autre bride 4. Les boulons 7 sont disposés le long d'une ligne circulaire autour de l'axe AA de révolution de la roue. Comme représenté sur la figure 1, la roue peut comporter, également, un jonc 8 destiné à réduire les bruits de crissement.

La partie la plus interne 9 de la jante 1, c'est à dire la partie la plus proche de l'axe AA de révolution, comporte deux congés de raccordement 10 et 11 de rayon comparable à la moitié de l'épaisseur de la jante, disposés en regard l'un de l'autre, reliés par une bande cylindrique 12 à peu près plate, de telle sorte que, en coupe, la partie la plus interne 9 de la jante ait une forme de tulipe disposée radialement par rapport à l'axe AA de la roue, et, évasée vers l'extérieur de la roue.
Chaque bride 3 ou 4 comporte, sur une face 13, destinée à coopérer avec le voile 6 de la roue, dans la partie la plus proche de l'axe de révolution, un évidement annulaire 15 de forme complémentaire de la moitié de l'épaisseur de l'extrémité 18 du voile 6, et destiné à s'encastrer sur l'extrémité du voile. La partie de la face 13 la plus éloignée de l'axe de révolution comporte une moulure 24 constituée d'un congé 25, d'un arrondi 26 et d'un plat 27 de telle sorte que, deux brides montées sur la roue, en regard l'une de l'autre, forment une gorge de section en forme de tulipe ménageant entre les brides 3 et 4 d'une part, et la jante 1 d'autre part, un espace annulaire dans lequel est placé l'amortisseur 5. L'évidements 15 a une profondeur dans le sens axial légèrement inférieure à la moitié de l'épaisseur de l'extrémité 18 du voile 6 de façon à ce que, lorsqu'elles sont montées, les deux brides soient en appui sur le voile sans coopérer l'une avec l'autre.

L'amortisseur 5 est constitué de deux anneaux identiques 19 et 20 jointifs. Chaque anneau 19 ou 20, comporte une âme 30 en matériau polymère élastique, enserrée entre et adhérente à deux flancs 31 et 32 en tôle. Le flanc 31 étant conformés de façon à pouvoir coopérer avec la jante et le flanc 32 étant conformé pour pouvoir coopérer avec la moulure 24 d'une bride 3 ou 4. De préférence, le matériau polymère est du caoutchouc chargé en additifs pour ajuster sa rigidité.

L'épaisseur de l'amortisseur 5 est légèrement supérieure à l'épaisseur de l'espace laissé libre entre la jante 1 et les brides 3 et 4 de telle sorte que l'amortisseur 5 soit soumis à un serrage de l'ordre d'un millimètre lorsque les brides 3 et 4 sont montées.

La roue, ainsi constituée, se monte très facilement et a pour avantage de permettre un réglage optimal de son comportement dynamique axial et radial en fonction de ce que l'utilisateur souhaite. Pour cela, il suffit d'ajuster la rigidité du caoutchouc qui constitue l'amortisseur ou la hauteur des lèvres de celui-ci.

On peut, en effet, soit minimiser le bruit engendré par le roulement sur le rail, soit minimiser les vibrations engendrées par le roulement et transmises à l'essieu, notamment lorsque l'essieu est directement couplé au moteur.

Les inventeurs ont constaté que, dans un cas comme dans l'autre, il fallait, tout d'abord que la masse de la jante soit la plus faible possible, et en tous cas inférieure à 110Kg lorsqu'elle est neuve.

Les inventeurs ont également constaté que :
- lorsqu'on veut minimiser le bruit de roulement, la rigidité dynamique radiale doit être comprise entre 6x10⁸ et 16x10⁸ N/m et la rigidité dynamique axiale doit être comprise entre 3x10⁸ et 8x10⁸ N/m;
- lorsqu'on veut minimiser la transmission de vibrations, la rigidité dynamique radiale doit être inférieure à 1x10⁸ N/m et la rigidité dynamique axiale doit être supérieure à 1x10⁸ N/m; de préférence, la raideur statique radiale doit être comprise entre 0,3x10⁸ et 0,5x10⁸ N/m et la raideur statique axiale doit être supérieure à 0,5x10⁸ N/m.

Le fait que l'amortisseur soit constitué d'anneaux comportant une âme en caoutchouc enserrée entre et adhérente à deux flancs en tôle améliore très sensiblement la tenue en service de la roue. En effet, les flancs en tôle, aux quels le caoutchouc adhère, empêchent le fluage du caoutchouc sous l'effet des contraintes. Il en résulte une bien meilleure stabilité en service des propriétés de l'amortisseur.

Un tel amortisseur peut être fabriqué très facilement par moulage directe du caoutchouc entre les flancs de tôle. Pour assurer l'adhérence du caoutchouc, il suffit de préparer la surface des flancs par sablage ou par grenaillage.

La roue selon l'invention présente également l'avantage de pouvoir être fabriquée de façon plus simple et moins coûteuse que les roue selon l'art antérieur. En effet, pour fabriquer ces roues, on peut forger une roue monobloc comportant un moyeu, un voile et une jante raccordée au voile par des congés de raccordement de rayon comparable à la demi épaisseur de la jante, puis séparer la jante du centre constitué par le moyeu et le voile, par exemple, par poinçonnage le long de la ligne de jonction des congés de raccordement et de la toile. Il suffit alors de faire un léger usinage pour éliminer les bavures de poinçonnage.

Dans une variante, l'amortisseur est constitué de deux bandes de caoutchouc, de longueur et de section adaptées, collées directement sur la jante à l'aide d'une colle. Cette technique a l'avantage de permettre d'utiliser, non pas des anneaux préfabriqués adaptés à chaque diamètre de roue, mais un ruban enroulé qu'il suffit de couper à longueur.

Ces roues polyblocs sont particulièrement adaptées à l'équipement de moyens de transport ferroviaire urbains ou suburbains tels que les tramways ou les métros. Ces roues ont, en général, un diamètre nominal compris entre environ 400mm et environ 920mm.

## Revendications

1. Roue de chemin de fer polyblocs du type comprenant une jante (1), un centre (2) constitué d'un moyeu (22) et d'un voile (6), un amortisseur (5) disposé entre le centre (2) et la jante (1), au moins une bride (3,4) et des moyens (7) de fixation de l'au moins une bride (3,4), caractérisé en ce que la jante (1) comporte, dans sa partie interne (9), deux congés (10,11) de raccordement situés de part et d'autre du plan de symétrie de la roue et reliés, dans leur partie la plus interne, par une bande annulaire (12) généralement plate, en ce que l'amortisseur (5) a une section en forme de tulipe, et en ce que l'amortisseur (5) est constitué de deux anneaux (19,20) constitués chacun d'un anneau (30) en matériau polymère élastique enserré entre et adhérent à un flanc métallique supérieur (31) et un flanc métallique inférieur (32), le flanc métallique supérieur (31) coopérant avec la partie la plus interne (9) de la jante (1), le flanc métallique inférieur (32) coopérant avec une bride (3,4).

2. Roue de chemin de fer selon la revendication 1 caractérisée en ce qu'elle comporte deux brides (3,4) enserrant l'amortisseur (5), maintenues par une pluralité de boulons (7) traversant le centre de la roue et assurant le serrage des deux brides (3,4) contre l'amortisseur (5).

3. Roue selon la revendication 1 ou la revendication 2 caractérisée en ce qu'elle comporte, en outre, un jonc (8) disposé dans une gorge annulaire de la jante (1).

4. Roue selon l'une quelconque des revendications 1 à 3 caractérisée en ce que la masse de la jante (1) est inférieure à 110Kg, en ce que sa rigidité dynamique radiale est comprise entre 6x10⁸ et 16x10⁸ N/m, et en ce que sa rigidité dynamique axiale est comprise entre 3x10⁸ et 8x10⁸ N/m.

5. Roue selon l'une quelconque des revendications 1 à 3 caractérisée en ce que la masse de la jante (1) est inférieure à 110Kg, en ce que sa rigidité dynamique radiale est inférieure à 1x10⁸N/m, en ce que sa rigidité dynamique axiale est supérieure à 1x10⁸N/m et en ce que sa raideurstatique axiale est supérieure à 0,5x10⁸N/m.

6. Procédé pour la fabrication de la jante (1) et du centre (2) d'une roue de chemin de fer polyblocs caractérisé en ce que :
- on fabrique par forgeage d'un lopin d'acier une roue monobloc comportant un centre constitué d'un moyeu et d'un voile, et une jante raccordée au voile par des congés de raccordement de rayon comparable à la demi épaisseur de la jante,
- par exemple par poinçonnage le long de la ligne de raccordement du voile et des congés de raccordement, on sépare la jante et le centre,
- on usine la jante et le centre.

## Claims

1. Composite railway vehicle wheel of the type comprising a wheel rim (1), a centre (2), constituted by a hub (22) and a wheel body (6), a shock absorber (5) arranged between the centre (2) and the wheel rim (1), at least one collar (3, 4) and fixing means (7) for the at least one collar (3, 4), characterised in that the wheel rim (1) comprises, in its internal portion (9), two connection fillets (10, 11) arranged on each side of the plane of symmetry of the wheel and connected, in their innermost portion, by a generally flat annular strip (12), in that the shock absorber (5) has a cross-section in the form of a tulip, and in that the shock absorber (5) is constituted by two rings (19, 20), each constituted by a ring (30) of resilient polymer material gripped between, and adhering to, an upper metal flank (31) and a lower metal flank (32), the upper metal flank (31) co-operating with the innermost portion (9) of the wheel rim (1), the lower metal flank (32) co-operating with a collar (3, 4).

2. Railway vehicle wheel according to claim 1, characterised in that it comprises two collars (3, 4) which grip the shock absorber (5) and are maintained by a plurality of bolts (7) passing through the centre of the wheel and ensuring the tightening of the two collars (3, 4) against the shock absorber (5).

3. Wheel according to claim 1 or 2, characterised in that it further comprises a retaining ring (8) arranged in an annular recess of the wheel rim (1).

4. Wheel according to any one of claims 1 to 3, characterised in that the mass of the wheel rim (1) is less than 110 kg, in that its radial dynamic rigidity is between 6 x 10⁸ and 16 x 10⁸ N/m, and in that its axial dynamic rigidity is between 3 x 10⁸ and 8 x 10⁸ N/m.

5. Wheel according to any one of claims 1 to 3, characterised in that the mass of the wheel rim (1) is less than 110 kg, in that its radial dynamic rigidity is less than 1 x 10⁸ N/m, in that its axial dynamic rigidity is greater than 1 x 10⁸ N/m and in that its axial static stiffness is greater than 0.5 x 10⁸ N/m.

6. Process for the production of the wheel rim (1) and of the centre (2) of a composite railway vehicle wheel, characterised in that:
- there is produced, by forging a steel blank, a single-piece wheel comprising a centre, constituted by a hub and a wheel body, and a wheel rim, connected to the wheel body by connection fillets having a radius comparable to half of the thickness of the wheel rim,
- the wheel rim and the centre are separated, for example, by punching along the connecting line of the wheel body and of the connection fillets,
- the wheel rim and the centre are machined.

## Patentansprüche

1. Mehrstückiges Schienenfahrzeugrad von einer Art, welches eine Felge (1), ein aus einer Radnabe (22) und einem Radkörper (6) bestehendes Mittelteil (2), einen zwischen dem Mittelteil (2) und der Felge angeordneten Stoßdämpfer (5), mindestens einen Flansch (3, 4), sowie Mittel (7) für die Befestigung von mindestens einem der Flansche (3, 4) aufweist,
**dadurch gekennzeichnet, daß**
die Felge (1) in ihrem inneren Teil (9) zwei Notlaufhohlkehlen (10, 11) für den Anschluß aufweist, die auf beiden Seiten der Symmetrieebene des Rades angeordnet und in ihrem innersten Teil mittels eines ringförmigen weitgehend flachen Bandes (12) verbunden sind, und dadurch, daß der Stoßdämpfer (5) einen trichterförmigen Querschnitt besitzt, und dadurch, daß der Stoßdämpfer aus zwei Ringen (19, 20) besteht, die jeweils aus einem Ring (30) aus einem elastischen Polymer bestehen, welcher zwischen und haftend an einer oberen metallischen Flanke (31) und einer unteren metallischen Flanke (32) eingespannt ist, wobei die obere metallische Flanke (31) mit dem innersten Teil (9) der Felge (1) zusammenwirkt, während die untere metallische Flanke (32) mit einem der Flanache (3, 4) zusammenwirkt.

2. Mehrstückiges Schienenfahrzeugrad nach Anspruch 1,
**dadurch gekennzeichnet, daß**
es zwei Flansche (3, 4), zwischen denen der Stoßdämpfer (5) eingespannt ist, aufweist, die mittels einer Vielzahl von Durchsteckschrauben (7) gehalten werden, welche den Mittelteil des Rades durchqueren und die Verspannung der beiden Flansche (3,4) an dem Stoßdämpfer (5) gewährleisten.

3. Mehrstückiges Schienenfahrzeugrad nach einem der Ansprüche 1 oder 2,
**dadurch gekennzeichnet, daß**
es außerdem einen Sprengring (8) aufweist, welcher in eine ringförmige Nut der Felge (1) eingesetzt ist.

4. Mehrstückiges Schienenfahrzeugrad nach einem der Ansprüche 1 bis 3,
**dadurch gekennzeichnet daß**
die Masse der Felge (1) unter 110 kg liegt, und dadurch, daß ihre radiale dynamische Steifigkeit zwischen 6 x 10⁸ und 16 x 10⁸ N/m liegt, und dadurch, daß ihre axiale dynamische Steifigkeit zwischen 3 x 10⁸ und 8 x 10⁸ N/m liegt.

5. Mehrstückiges Schienenfahrzeugrad nach einem der Ansprüche 1 bis 3,
**dadurch gekennzeichnet, daß**
die Masse der Felge unter 110 kg liegt, und daß ihre radiale dynamische Steifigkeit unter 1 x 10⁸ N/m liegt, und daß ihre axiale dynamische Steifigkeit üb er 1 x 10⁸ N/m liegt und dadurch, daß ihre statische axiale Steifheit über 0,5 x 10⁸ liegt.

6. Verfahren für die Herstellung der Felge (1) und des Mittelteile (2) eines mehrstückigen Schienenfahrzeugrades,
**dadurch gekennzeichnet, daß**
- durch Schmieden eines Stahlrohlings ein einteiliges Schienenfahrzeugrad hergestellt wird, welches einen Mittelteil aufweist, der aus einer Radnabe und einem Radkörper besteht, sowie eine Felge, welche mit dem Radkörper über verbindende Notlaufhohlkehlen mit einem Radius verbunden ist, welcher der halben Wandstärke der Felge entspricht,
- und zum Beispiel durch Stanzen entlang der Anschlußlinie zwischen dem Radkörper und den verbindenden Notlaufhohlkehlen die Felge von dem Mittelteil getrennt wird, und
- die Felge und der Mittelteil mechanisch bearbeitet werden.
